# EUROPEAN PATENT APPLICATION

(11) **EP 2 339 573 A2**
(43) Date of publication of application: **29.06.2011**
(21) Application number: 10252183.8
(22) Date of filing: 21.12.2010
(51) Int. Cl.: G09G 5/10, G09G 5/22, G06F 3/048

(54) **Display apparatus, display control method, and computer-readable medium storing display control program**

(30) Priority: 28.12.2009 JP 2009298613
(71) Applicant: Brother Kogyo Kabushiki Kaisha, Nagoya-shi, Aichi-ken 467-8561 (JP)
(72) Inventor: Kitagawa, Akira, Nagoya-shi Aichi-ken 467-8562 (JP)
(74) Representative: Smith, Samuel Leonard

(57) **Abstract**

A distance from a user to a display apparatus (1) is detected (steps S106 and S108). Based on the detected distance, an application, an input device, an icon state, a character size, a volume level and a luminance level are selected (steps S 112 to S 117). Audio to be output is set to the selected volume (step S 118), and an application that may be operated by using the selected input device is displayed on a display (step S 119). Based on the selected icon state, an icon is displayed on the display or no icon is displayed (step S 119). Based on the selected luminance level and character size, luminance of the display and the size of a character displayed on the display are adjusted (step S 119).

## Description

### BACKGROUND

The present disclosure relates to a display apparatus that includes a display that is adapted to display an image, a display control method, and a computer-readable medium storing a display control program.

A display apparatus is known that can adjust a display density and display luminance of a screen. For example, the display apparatus may capture an image of a user by a charge-coupled device (CCD) camera, and may output measured distance data between the user and the display apparatus based on the captured image data (for example, refer to Japanese Laid-Open Patent Publication No. 11-95738). Based on the measured distance data, the display apparatus may calculate the viewing angle and direction of the user relative to the display screen. In accordance with the calculated value, the display apparatus may set the display density and the display luminance that correspond to the viewing angle and direction of the user relative to the display screen. Therefore, when the posture of the user changes, the display apparatus may automatically adjust the display density and the display luminance of the screen such that the display density and the display luminance may correspond to the viewing angle and direction of the user relative to the display screen.

### SUMMARY

With the above-described display apparatus, the display density and the display luminance may be set based on the position of the user such that the user can easily confirm the display screen. However, the display apparatus may not change an application based on the distance from the user to the display apparatus.

Various exemplary embodiments of the broad principles derived herein provide a display apparatus, a display control method and a computer-readable medium storing a display control program that are capable of changing an application based on a distance from a user to the display apparatus.

A display apparatus according to a first aspect of the present invention includes a display that is adapted to display an image, a first storage device that stores first data in which each of a plurality of reference distances is associated with at least one application of a plurality of applications, a detection device that detects a target distance that is a distance from a user to the display apparatus, a selection device that refers to the first data and selects, from among the plurality of applications, the at least one application associated with one of the plurality of reference distances corresponding to the target distance detected by the detection device, and a display control device that activates the at least one application selected by the selection device and displays the at least one application on the display.. In this case, an application associated with the target distance detected by the detection device may be selected and the selected application may be displayed on the display. Namely, an application may be automatically changed based on the distance from the user to the display apparatus.

The display apparatus may include a plurality of input devices that are respectively used in different input methods, each of the input methods being a method in which a command is input. In the first data, each of the plurality of reference distances may be associated with the at least one application that can be operated via the input device that can be used at the each of the plurality of reference distances. In this case, the selection device may select an application that can be operated via the input device that can be used at the target distance detected by the detection device. Then, the application selected by the selection device may be displayed on the display. For example, an application that can be operated via the input device that is appropriate for the distance from the user to the display apparatus can be automatically displayed. Therefore, the user's operation to select the application may be reduced.

The display apparatus may include a touch input device that is provided on a main body of the display apparatus and via which a command can be input by being touched. In the first data, at least one of the plurality of reference distances within a first range may be associated with, among the plurality of applications, an application that can be operated via the touch input device, the first range being a range in which a hand of the user reaches the main body. Accordingly, in a case where the target distance detected by the detection device is within the first range, the selection device may select an application that can be operated via the touch input device. Then, the application selected by the selection device may be displayed on the display. Namely, in a case where the target distance detected by the detection device is within the first range, the application that can be operated via the touch input device may be automatically displayed. For example, in a case where the range of distance in which the user's hand reaches the display apparatus is set as the first range, the application that can be operated via the touch input device may be automatically displayed. Therefore, the user's operation to select the application may be reduced.

In a case where the target distance is at least within the first range, the command can be input by operation of the touch input device. In a case where the target distance is larger than an upper limit of the first range, the touch input device may not operate. Therefore, it is possible to reduce electric power consumption.

The display apparatus may include a non-contact input device via which a command can be input without the main body being touched. In the first data, at least one of the plurality of reference distances within a second range may be associated with, among the plurality of applications, an application that can be operated via the non-contact input device, the second range being a specified distance range, and a lower limit of the second range being larger than the upper limit of the first range. Accordingly, in a case where the target distance detected by the detection device is within the second range, the selection device may select an application that can be operated via the non-contact input device. Then, the application selected by the selection device may be displayed on the display. Namely, in a case where the target distance detected by the detection device is within the second range, the application that can be operated via the non-contact input device may be automatically displayed. For example, in a case where the range of distance in which the user's hand does not reach the display apparatus is set as the second range, the application that can be operated via the non-contact input device may be automatically displayed. Therefore, the user's operation to select the application may be reduced.

In a case where the target distance is at least within the second range, the command can be input by operation of the non-contact input device. In a case where the target distance is larger than an upper limit of the second range, the non-contact input device may not operate. Therefore, it is possible to reduce electric power consumption.

In the first data, at least one of the plurality of reference distances within a third range may be associated with, among the plurality of applications, an application that need not be operated by the user, the third range being a specified distance range, and a lower limit of the third range being larger than the upper limit of the second range. Accordingly, in a case where the target distance detected by the detection device is within the third range, the selection device may select an application that need not be operated by the user. Then, the application selected by the selection device may be displayed on the display. Namely, in a case where the target distance detected by the detection device is within the third range, the application that need not be operated by the user may be automatically displayed. For example, in a case where the range of distance in which the user is far away from the display apparatus is set as the third range, the application that need not be operated by the user may be automatically displayed.

In a case where the target distance is detected a specified number of times consecutively by the detection device, the selection device may refer to the first data, and may select, from among the plurality of applications, the at least one application associated with one of the plurality of reference distances corresponding to the target distance. In a case where the target distance is not detected the specified number of times consecutively by the detection device, the selection device may select none of the plurality of applications. In this case, an application may be selected only in a case where the target distance is detected the plurality of times consecutively. Therefore, for example, in a case where a person just passes through in front of the display apparatus, the target distance may not be detected the plurality of times consecutively. Accordingly, the application may not be selected by the selection device.

In the first data, each of the plurality of reference distances may be associated with a plurality of the applications. The selection device may refer to the first data, and may select the plurality of applications associated with one of the plurality of reference distances corresponding to the target distance. The display control device may activate one application of the plurality of applications selected by the selection device, and may display the one application on the display. The display control device may display the other applications of the plurality of applications selected by the selection device, as icons, on the display. In this case, while the one application is being displayed on the display, the other applications can be displayed as icons. Thus, the user can select one of the other applications by selecting one of the icons.

The display apparatus may include a second storage device that stores second data in which each of the plurality of reference distances is associated with one of a plurality of icon sizes. The display control device may refer to the second data, may select, from among the plurality of icon sizes, an icon size associated with one of the plurality of reference distances corresponding to the target distance, and may display on the display the icons in the selected icon size. In this case, the icon size may be set in accordance with the distance between the user and the display apparatus. For example, in a case where the distance between the user and the display apparatus is large, the icon size can be set to be large, and in a case where the distance between the user and the display apparatus is small, the icon size can be set to be small.

The display apparatus may include a third storage device that stores third data in which each of the plurality of reference distances is associated with one of a plurality of character sizes. The display control device may refer to the third data, may select, from among the plurality of character sizes, a character size associated with one of the plurality of reference distances corresponding to the target distance, and may display on the display a character in the selected character size. In this case, the character size may be set in accordance with the distance between the user and the display apparatus. For example, in a case where the distance between the user and the display apparatus is large, the character size can be set to be large, and in a case where the distance between the user and the display apparatus is small, the character size can be set to be small.

The display apparatus include a speaker that is adapted to output audio, a fourth storage device that stores fourth data in which each of the plurality of reference distances is associated with one of a plurality of volume levels of the audio to be output from the speaker, and an output control device that refers to the fourth data and selects, from among the plurality of volume levels, a volume level associated with one of the plurality of reference distances corresponding to the target distance, and that causes the audio to be output from the speaker at the selected volume level. In this case, the volume level may be set in accordance with the distance between the user and the display apparatus. For example, in a case where the distance between the user and the display apparatus is large, the volume level can be set to be large, and in a case where the distance between the user and the display apparatus is small, the volume level can be set to be small.

The display apparatus may include a fifth storage device that stores fifth data in which each of the plurality of reference distances is associated with one of a plurality of luminance levels of the display, and a luminance setting device that refers to the fifth data and selects, from among the plurality of luminance levels, a luminance level associated with one of the plurality of reference distances corresponding to the target distance, and that sets luminance of the display to the selected luminance level. In this case, the luminance of the display may be set in accordance with the distance between the user and the display apparatus. For example, in a case where the distance between the user and the display apparatus is large, the luminance can be set to be large, and in a case where the distance between the user and the display apparatus is small, the luminance can be set to be small.

A display control method according to a second aspect of the present invention is performed in a display apparatus including a display that is adapted to display an image. The method includes the steps of detecting a target distance that is a distance from a user to the display apparatus, referring to data in which each of a plurality of reference distances is associated with at least one application of a plurality of applications, selecting, from among the plurality of applications, the at least one application associated with one of the plurality of reference distances corresponding to the target distance, activating the at least one application, and displaying the at least one application on the display. In this case, an application associated with the target distance may be selected and the selected application may be displayed on the display. Namely, an application may be automatically changed based on the distance from the user to the display apparatus.

A computer-readable medium according to a third aspect of the present invention stores a display control program that is executed in a display apparatus including a display that is adapted to display an image. The program includes instructions that cause a computer to perform the steps of the display control method according to the second aspect. In this case, an application associated with the target distance may be selected and the selected application may be displayed on the display. Namely, an application may be automatically changed based on the distance from the user to the display apparatus.

### BRIEF DESCRIPTION OF THE DRAWINGS

Exemplary embodiments will be described below in detail with reference to the accompanying drawings in which:

FIG. 1 is a front view of a display apparatus 1;

FIG. 2 is a schematic diagram showing an electrical configuration of the display apparatus 1;

FIG. 3 is a schematic diagram showing storage areas of a flash memory 24;

FIG. 4 is a schematic diagram showing a first data table 41;

FIG. 5 is a schematic diagram showing an input device data table 42;

FIG. 6 is a schematic diagram showing a second data table 43;

FIG 7 is a schematic diagram showing a third data table 44;

FIG. 8 is a schematic diagram showing a fourth data table 45;

FIG. 9 is a schematic diagram showing a fifth data table 46;

FIG. 10 is a flowchart showing main processing;

FIG. 11 is a diagram showing an example of an image displayed on a display 11;

FIG. 12 is a diagram showing an example of an image displayed on the display 11; and

FIG. 13 is a diagram showing an example of an image displayed on the display 11.

### DETAILED DESCRIPTION

Hereinafter, a display apparatus according to an embodiment of the present disclosure will be explained with reference to the drawings. The drawings are used for explaining technical features that can be used in the present disclosure. A device configuration, a flowchart of various types of processing, and the like that are described are simply explanatory examples and do not limit the present disclosure to only the configuration, the flowchart, and the like.

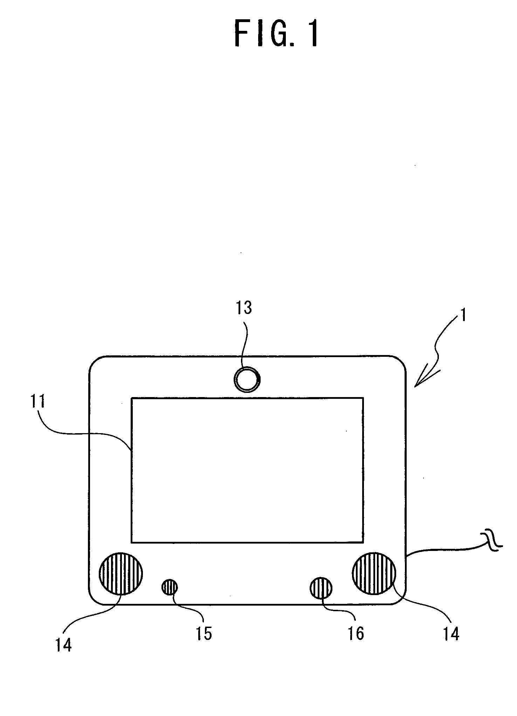

An overview of a display apparatus 1 will be explained with reference to FIG. 1. The display apparatus 1 may display various applications on a display 11. The display apparatus 1 may be placed on a piece of furniture or hung on a wall, for example. The display apparatus 1 may be connected to a public network to perform communication with another terminal. The display apparatus 1 may be connected to the Internet network to transmit and receive various types of information. In FIG. 1, the left-right direction of the page is the left-right direction of the display apparatus 1, and the up-down direction of the page is the up-down direction of the display apparatus 1.

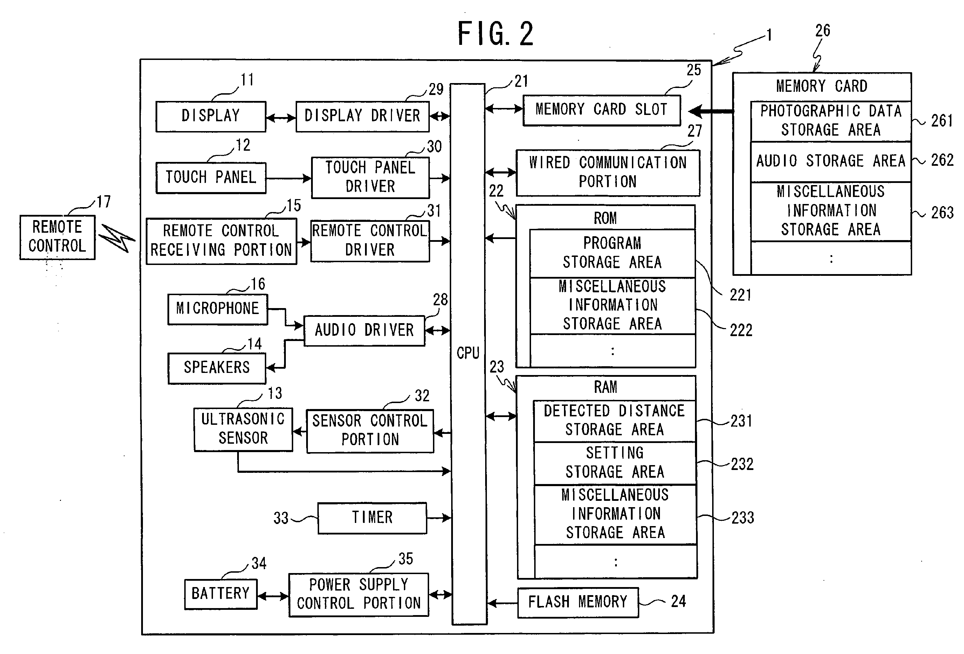

As shown in FIG. 1, the display apparatus 1 has a substantially rectangular shape in a front view, and is longer in the left-right direction. The display 11 is provided substantially in a center of the display apparatus 1. A touch panel 12 (refer to FIG. 2) is provided on a front surface of the display 11. A user may input a command to the display apparatus 1 by touching the touch panel 12 while visually confirming various pieces of information displayed on the display 11. The display apparatus 1 is provided with an ultrasonic sensor 13 on an upper side of the display 11. The ultrasonic sensor 13 can measure a distance from the user to the display apparatus 1. The display apparatus 1 is provided with a microphone 16, speakers 14 and a remote control receiving portion 15 on a lower side of the display 11. The user may make a voice call with another user via the microphone 16 and the speakers 14. The user may input a command to the display apparatus 1 via the remote control receiving portion 15 through infrared communication by using a remote control 17 (refer to FIG. 2). The display apparatus 1 is driven by electric power supplied from a built-in battery 34 (refer to FIG. 2) or electric power supplied from an alternating-current (AC) power supply via an AC adaptor. The applications etc. displayed on the display 11 will be described below.

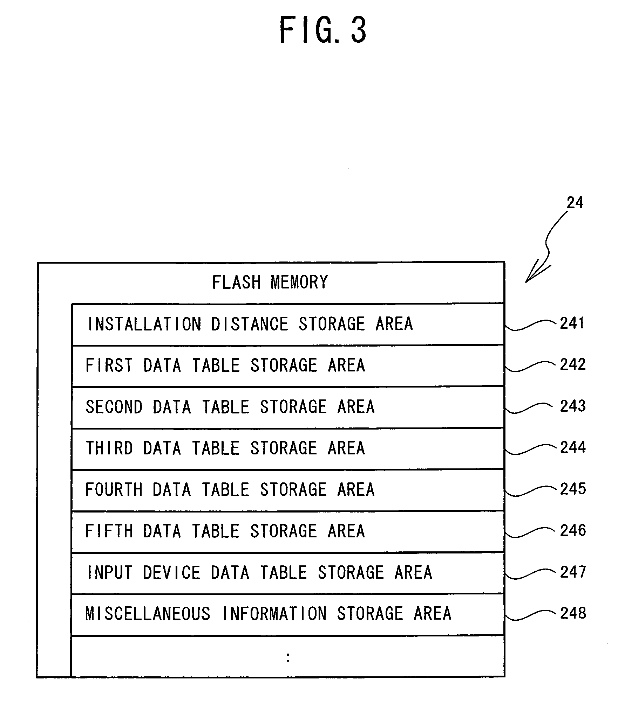

An electrical configuration of the display apparatus 1 will be explained with reference to FIGS. 2 and 3. As shown in FIG. 2, the display apparatus 1 includes a CPU 21, a ROM 22, a RAM 23 and a flash memory 24. The CPU 21 controls various types of processing of the display apparatus 1. The CPU 21 is electrically connected to the ROM 22, the RAM 23 and the flash memory 24. The CPU 21 can access storage areas of the ROM 22, the RAM 23 and the flash memory 24.

The ROM 22 includes at least a program storage area 221 and a miscellaneous information storage area 222. The program storage area 221 stores program data that is necessary for the CPU 21 to execute various types of processing.

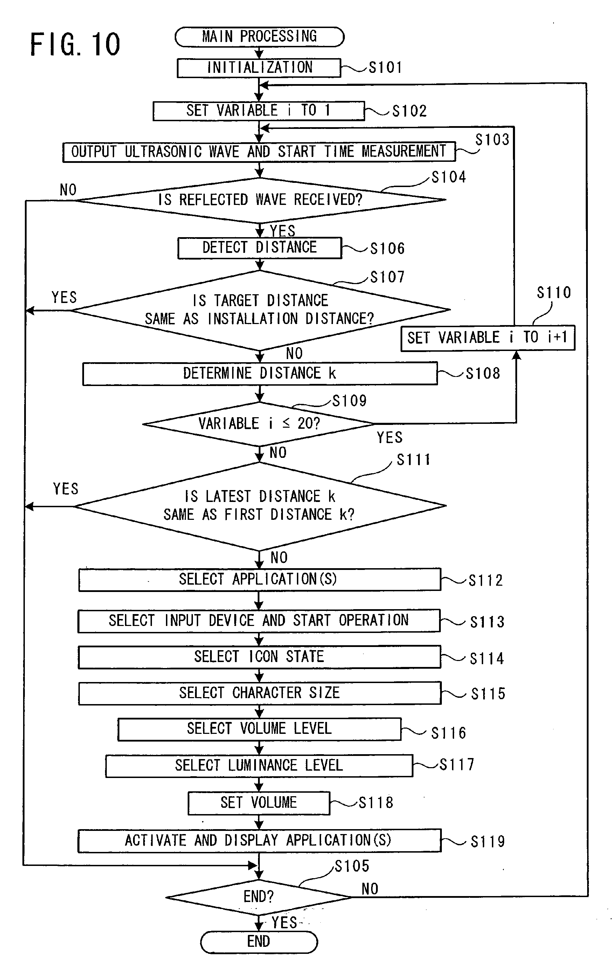

The RAM 23 includes at least a detected distance storage area 231, a setting storage area 232 and a miscellaneous information storage area 233. The detected distance storage area 231 stores a distance k which is a distance detected by processing at step S106 (refer to FIG. 10) and is determined as a distance k from the user to the display apparatus 1 by processing at step S108 (refer to FIG. 10). The setting storage area 232 stores various types of settings that are selected by processing at steps S 112 to S 117 (refer to FIG. 10). The steps S 106, S 108, S 112 to S 117 will be described below.

As shown in FIG. 3, the flash memory 24 includes at least an installation distance storage area 241, a first data table storage area 242, a second data table storage area 243, a third data table storage area 244, a fourth data table storage area 245, a fifth data table storage area 246, an input device data table storage area 247 and a miscellaneous information storage area 248.

The installation distance storage area 241, the first data table storage area 242, the second data table storage area 243, the third data table storage area 244, the fourth data table storage area 245, the fifth data table storage area 246 and the input device data table storage area 247 respectively stores an installation distance, a first data table 41, a second data table 43, a third data table 44, a fourth data table 45, a fifth data table 46 and an input device data table 42, all of which will be described below.

As shown in FIG. 2, the display apparatus 1 includes a memory card slot 25, into which a memory card 26 may be inserted. The memory card 26 includes at least a photographic data storage area 261, an audio storage area 262 and a miscellaneous information storage area 263. The photographic data storage area 261 stores photographic data that is to be displayed on the display 11 in a slide show mode etc., which will be described below. The audio storage area 262 stores music data that is to be played back in an audio playback mode, which will be described below. The CPU 21 may be electrically connected to the memory card 26 via the memory card slot 25. The CPU 21 may access the storage areas of the memory card 26.

The display apparatus 1 includes a wired communication portion 27, which is used for performing communication by connecting to a public network or the Internet network. The CPU 21 is electrically connected to the wired communication portion 27. The CPU 21 may transmit and receive communication data via the public network or the Internet network.

The display apparatus 1 includes the microphone 16, the speakers 14 and an audio driver 28. Audio may be input via the microphone 16, and be output from the speakers 14. The audio driver 28 controls conversion between an audio signal and an electrical signal. The CPU 21 is electrically connected to the audio driver 28. The audio driver 28 is electrically connected to the microphone 16 and the speakers 14. The CPU 21 may recognize the audio input via the microphone 16. The CPU 21 may cause audio to be output from the speakers 14.

The display apparatus 1 includes the display 11 and a display driver 29. The display driver 29 conducts display drive control of the display 11. The CPU 21 is electrically connected to the display driver 29, which is electrically connected to the display 11. The CPU 21 may cause the display 11 to display an image.

The display apparatus 1 includes the touch panel 12 and a touch panel driver 30. A command from the user may be input via the touch panel 12. The touch panel driver 30 drives the touch panel 12. The CPU 21 is electrically connected to the touch panel driver 30. The CPU 21 may recognize the command of the user that is input via the touch panel 12.

The display apparatus 1 includes the remote control receiving portion 15 and a remote control driver 31. A command from the user may be input to the remote control receiving portion 15 via the remote control 17. The remote control driver 31 drives the remote control receiving portion 15. The CPU 21 is electrically connected to the remote control driver 31. The CPU 21 may recognize the command of the user that is input via the remote control 17 and the remote control receiving portion 15.

The display apparatus 1 includes the ultrasonic sensor 13 and a sensor control portion 32. The ultrasonic sensor 13 is used to detect a distance. The sensor control portion 32 conducts drive control of the ultrasonic sensor 13. The sensor control portion 32 may control the ultrasonic sensor 13 to perform switching between an output mode and a receiving mode. The output mode is a mode for outputting an ultrasonic wave. The receiving mode is a mode for receiving a reflected wave, which is an ultrasonic wave that is reflected when the output ultrasonic wave hits an object. The CPU 21 is connected to the sensor control portion 32 and the ultrasonic sensor 13. The CPU 21 may cause an ultrasonic wave to be output from the ultrasonic sensor 13 that has been set to the output mode. The CPU 21 may recognize the ultrasonic wave received by the ultrasonic sensor 13 that has been set to the receiving mode.

The display apparatus 1 includes a timer 33. The CPU 21 is electrically connected to the timer 33. The CPU 21 may use the timer 33 to display time on the display 11 or to measure time.

The display apparatus 1 includes the battery 34 and a power supply control portion 35. The power supply control portion 35 may supply electric power supplied from the battery 34 to another circuit. The CPU 21 and other various kinds of devices may be driven by electric power supplied by the battery 34 via the power supply control portion 35. Although not shown in the drawings, the display apparatus includes a jack that is used for connecting the display apparatus 1 to an AC adaptor and supplying electric power from the AC power supply to the display apparatus 1. The display apparatus 1 may be driven by electric power supplied from the AC power supply.

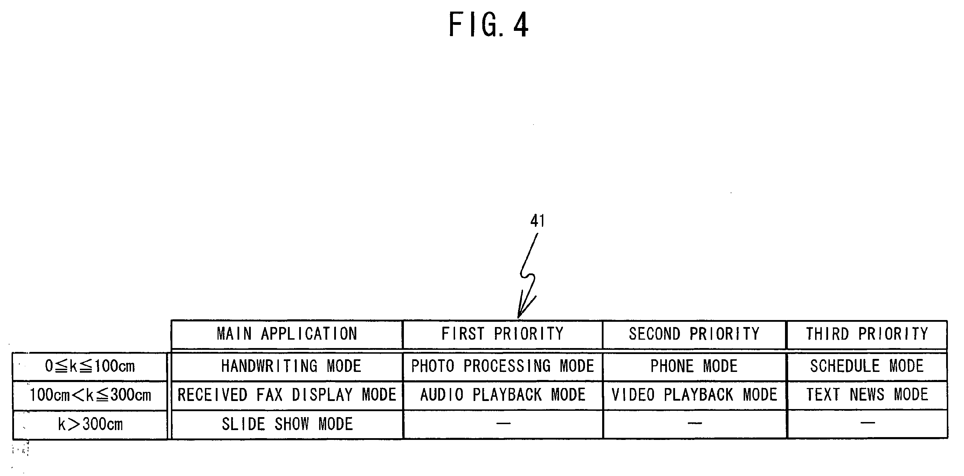

The data tables 41 to 46 will be explained with reference to FIGS. 4 to 9. Information registered in the data tables 41 to 46 may be set by the user as desired.

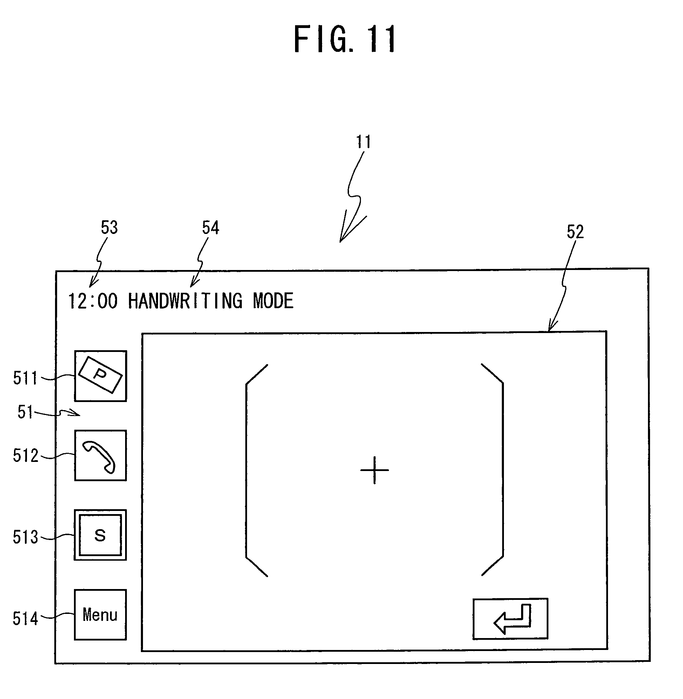

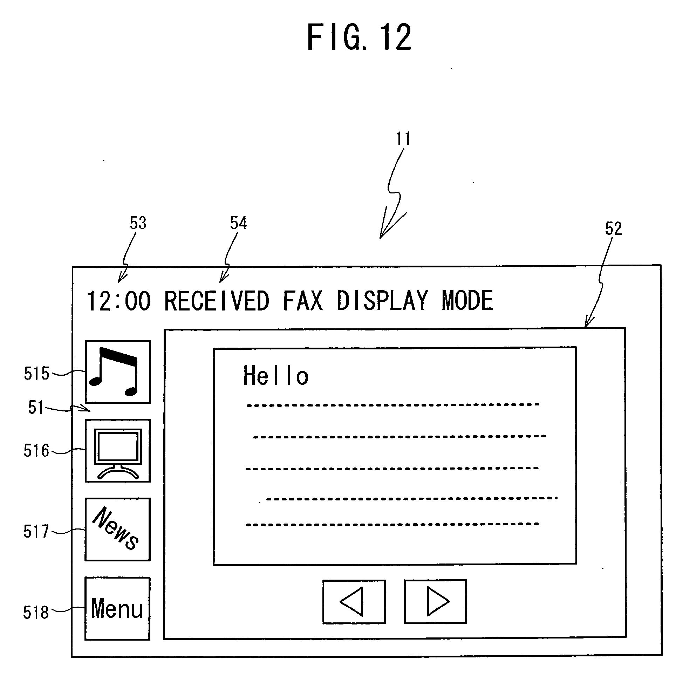

An example of the first data table 41 will be explained with reference to FIG. 4. As shown in FIG. 4, distances k and applications are associated with each other and registered in the first data table 41. Each of the distances k is a distance from the user to the display apparatus 1. The applications registered in the first data table 41 include main applications and icon display applications. One of the main applications is displayed on a main display portion 52 (refer to FIGS. 11 to 13, which will be described below). The icon display applications, which are displayed as icons on an icon display portion 51 (refer to FIGS. 11 and 12), have priorities. The icon display applications are referred to as a "first priority", a "second priority" and a "third priority", in an order of descending priorities. The priorities are not limited to the three priorities of the first to third priorities, and may be six priorities of first to sixth priorities, for example.

The distances k are divided into ranges of 0 ≤ k ≤100 cm, 100 cm < k < 300 cm, and k > 300 cm. The divided distances k are associated with the applications. The range of 0 ≤ k ≤100m is associated with a handwriting mode, which is one of the main applications. Further, the range of 0≤ 100 cm is associated with a photo processing mode, a phone mode and a schedule mode, as the first priority, the second priority and the third priority, respectively. The range of 100 cm < k ≤300 is associated with a received fax display mode, which is one of the main applications. Further, the range of 100 cm < k ≤ 300 cm is associated with the audio playback mode, a video playback mode and a text news mode, as the first priority, the second priority and the third priority, respectively. The range of k > 300 cm is associated with the slide show mode, which is one of the main applications. In FIG. 4, the cells denoted by minus signs indicate that no application is registered.

All the applications that are associated with the range of 0 ≤ k ≤ 100 cm may be operated by the user using the touch panel 12. In the range of 0 ≤ k ≤ 100 cm, the user's hand may reach the touch panel 12. Namely, the user may use the touch panel 12. Therefore, in the range of 0 ≤ k ≤ 100 cm, the applications that may be operated via the touch panel 12, which is an input device that the user may use, are registered. Accordingly, in a case where the distance k is in the range of 0 ≤ k ≤ 100 cm, the applications that may be operated by using the touch panel 12 are automatically displayed by processing at step S 119 (refer to FIG. 10), which will be described below. The applications that are associated with the range of 0 ≤ k ≤ 100 cm may also be operated by using the remote control 17.

All the applications that are associated with the range of 100 cm < k ≤ 300cm may be operated by the user using the remote control 17. In the range of 100 cm < k ≤ 300 cm, although the user's hand does not reach the touch panel 12, the user may use the remote control 17. Therefore, in the range of 100 cm < k ≤ 300 cm, the applications that may be operated via the remote control 17, which is an input device that the user may use, are registered. Accordingly, in a case where the distance k is in the range of 100 cm < k ≤ 300 cm, the applications that may be operated by using the remote control 17 are automatically displayed by the processing at step S 119 (refer to FIG. 10), which will be described below. As a result, user's operations to select the applications may be reduced.

The slide show mode that is associated with the range of k > 300 cm is an application that does not require an operation by the user. In the range of k > 300 cm, the distance from the user to the display apparatus 1 is long. Therefore, the user may not intend to operate any application of the display apparatus 1. As a result, in the range of k > 300 cm, the application that does not require an operation by the user is registered. Accordingly, in a case where the distance k is in the range of k > 300 cm, the application that does not require an operation is automatically displayed by the processing at step S 119 (refer to FIG. 10), which will be described below.

In the handwriting mode, the user may input a character etc. by using the touch panel 12. In the photo processing mode, the user may perform editing etc. of a photograph stored in the photographic data storage area 261 of the memory card 26 (refer to FIG. 2). In the phone mode, the user may make a phone call to another terminal via the wired communication portion 27 (refer to FIG. 2). In a case where the phone mode is selected, phone operation buttons such as numbers are displayed on the display 11. The user may make a phone call by touching positions of the phone operation buttons on the touch panel 12 or by selecting from an address book registered in advance. The user may use the microphone 16 and the speakers 14 to talk with a user of the other terminal. In the schedule mode, the user may write down the user's schedule.

In the received fax display mode, the content of the received fax may be displayed on the display 11. In the audio playback mode, music may be played back based on the music data stored in the audio storage area 262 of the memory card 26. In the video playback mode, video downloaded from the Internet network via the wired communication portion 27 may be played back. In the text news mode, news downloaded from the Internet network via the wired communication portion 27 may be displayed as a text. In the slide show mode, the photographs stored in the photographic data storage area 261 of the memory card 26 may be displayed in order on the display 11.

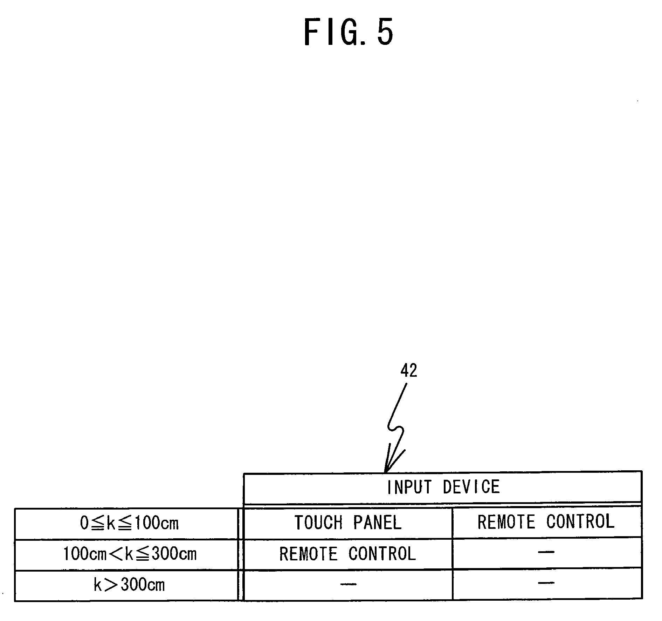

An example of the input device data table 42 will be explained with reference to FIG. 5. The distances k and input devices that are set in an operable state are associated with each other and registered in the input device data table 42. The distances k are divided into ranges of 0 ≤ k ≤ 100 cm, 100 cm < k ≤ 300 cm, and k > 300 cm. Thus, the distances k are divided into the same ranges as those of the first data table 41.

The range of 0 ≤ k ≤ 100 cm is associated with the touch panel 12 and the remote control 17. Namely, in the range of 0 ≤ k ≤ 100 cm, the touch panel 12 and the remote control receiving portion 15 are set in an operable state. The range of 100 cm < k ≤ 300 cm is associated with the remote control 17. Namely, in the range of 100 cm < k ≤ 300 cm, only the remote control receiving portion 15 is set in an operable state. There is no input device that is associated with the range of k > 300 cm. Namely, in the range of k > 300 cm, neither the touch panel 12 nor the remote control receiving portion 15 operates. Registered in the input device data table 42 are the input devices that may be used for operating the respective applications registered in the first data table 41.

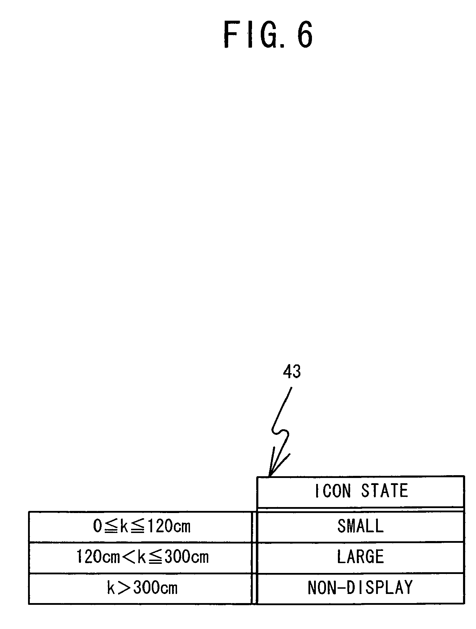

An example of the second data table 43 will be explained with reference to FIG. 6. The distances k and icon states are associated with each other and registered in the second data table 43. Each of the icon states indicates a state in which an icon is displayed. The icon states are classified into "small", "large" and "non-display". In a case where the icon state is "small", a relatively small icon is displayed on the display 11. In a case where the icon state is "large", an icon having a larger size than in the case where the icon state is "small" is displayed on the display 11. In a case where the icon display is "non-display", no icon is displayed on the display 11. The distances k are divided into ranges of 0 ≤ k ≤120 cm, 120 cm < k ≤ 300 cm, and k > 300 cm.

The range of 0 ≤ k ≤20 cm is associated with the icon state "small". The range of 120 cm < k ≤ 300 cm is associated with the icon state "large". The range of k > 300 cm is associated with the icon state "non-display".

The second data table 43 is set so that the icon may be displayed on the display 11 in an appropriate size in accordance with the distance k. In the range of 0 ≤ k ≤120 cm, the distance from the user to the display apparatus 1 is relatively short. Therefore, even if the icon state is set to "small", the user may easily confirm the application indicated by each of the icons. In the range of 120 cm < k ≤ 300 cm, there is some distance from the user to the display apparatus 1. However, the icon state is set to "large" and the icon is displayed in a large size, so the user may easily confirm the application indicated by each of the icons. As described above, in the range of k > 300 cm, the application that does not require an operation by the user is displayed, and the touch panel 12 and the remote control receiving potion 15, which are the input devices, do not operate (refer to FIG. 5). As a result, the user cannot select an icon using the input device. Therefore, in the range of k > 300 cm, the icon state is set to "non-display" so that no icon is displayed.

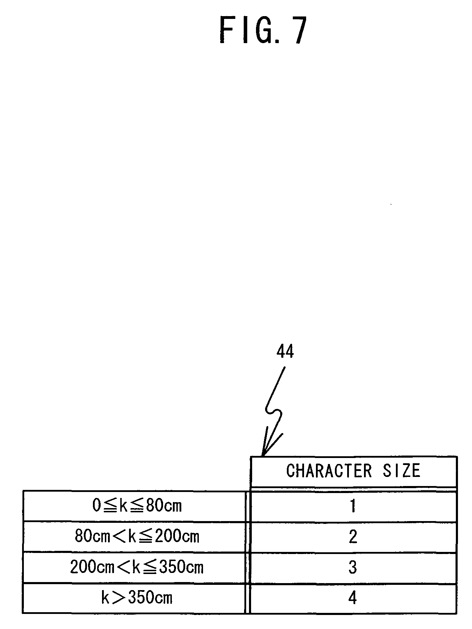

An example of the third data table 44 will be explained with reference to FIG. 7. The distances k and the sizes of a character displayed on the display 11 are associated with each other and registered in the third data table 44. The character sizes are expressed by the numbers 1 to 4 such that the larger the numeric value is, the larger the character size is. The distances k are divided into ranges of 0 ≤ k ≤80 cm, 80 cm < k ≤ 200cm, 200 < k ≤ 350 cm, and k > 350 cm.

The range of 0 ≤ k ≤ 80 cm is associated with the character size "1 ". The range of 80 cm < k ≤ 200 cm is associated with the character size "2". The range of 200 cm < k ≤ 350 cm is associated with the character size "3". The range of k > 350 cm is associated with the character size "4".

The third data table 44 is set so that a character may be displayed in an appropriate size on the display 11 in accordance with the distance k. Namely, the third data table 44 is set so that, as the distance from the user to the display apparatus 1 becomes larger, the character may be displayed in a larger size. As a result, the user may easily confirm the character displayed on the display 11.

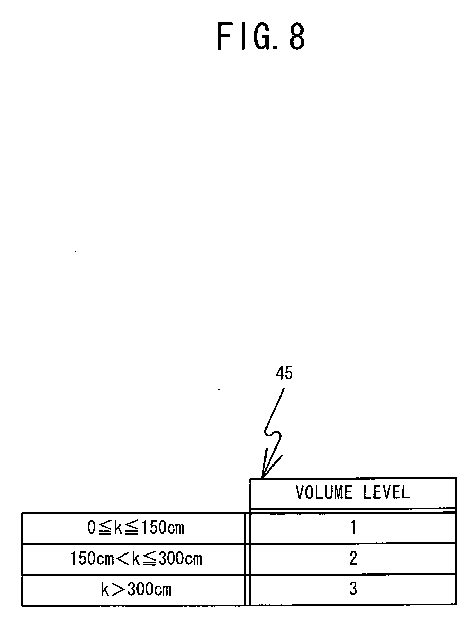

An example of the fourth data table 45 will be explained with reference to FIG. 8. The distances k and volume levels of audio output from the speakers 14 are associated with each other and registered in the fourth data table 45. The volume levels are expressed by the numbers 1 to 3 such that the larger the numeric value is, the larger the volume is. The distances k are divided into ranges of 0 ≤ k ≤ 150 cm, 150 cm < k ≤ 300 cm, and k > 300 cm.

The range of 0 ≤ k ≤ 150 cm is associated with the volume level "1". The range of 150 cm < k ≤300 cm is associated with the volume level "2". The range of k > 300 cm is associated with the volume level "3".

The fourth data table 45 is set so that audio may be output from the speakers 14 at an appropriate volume in accordance with the distance k. Namely, the fourth data table 45 is set so that, as the distance from the user to the display apparatus 1 becomes larger, the audio may be output from the speakers 14 at a higher volume. As a result, the user may easily hear the audio. In a case where the distance from the user to the display apparatus 1 is small, the volume level is set to a low level. Therefore, electric power consumption may be reduced.

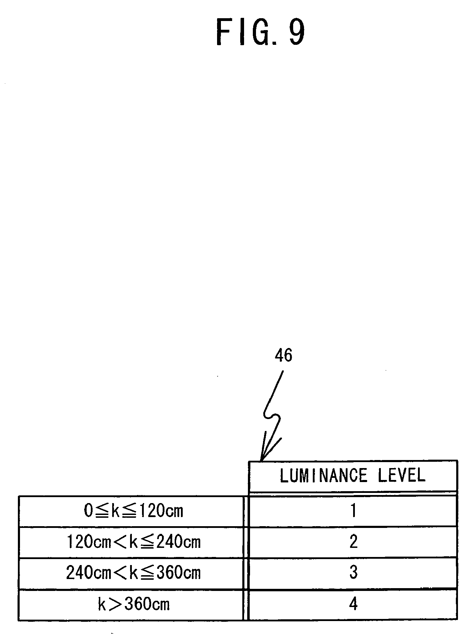

An example of the fifth data table 46 will be explained with reference to FIG. 9. The distances k and luminance levels of the display 11 are associated with each other and registered in the fifth data table 46. The luminance levels are expressed by the numbers 1 to 4 such that the larger the numeric value is, the larger the luminance is. The distances k are divided into ranges of 0 ≤ k ≤120 cm, 120 cm < k ≤ 240 cm, 240 < k ≤ 360 cm, and k > 360 cm.

The range of 0 ≤ k ≤120cm is associated with the luminance level "1 ". The range of 120 cm < k ≤ 240 cm is associated with the luminance level "2". The range of 240 cm < k ≤ cm is associated with the luminance level "3". The range of k > 360 cm is associated with the luminance level "4".

The fifth data table 46 is set so that the luminance of the display 11 may be adjusted to an appropriate level in accordance with the distance k. Namely, the fifth data table 46 is set so that, as the distance from the user to the display apparatus 1 becomes larger, the display 11 displays the application etc. at a higher luminance. As a result, the user may easily confirm the application etc. displayed on the display 11. In a case where the distance from the user to the display apparatus 1 is small, the display 11 is set to a low luminance. Therefore, electric power consumption may be reduced.

Main processing performed by the display apparatus 1 of the present embodiment will be explained with reference to a flowchart shown in FIG. 10. The main processing is performed by the CPU 21 in accordance with a program stored in the program storage area 221 of the ROM 22.

As shown in FIG. 10, first, initialization of various data is performed (step S101). Specifically, various parameters and the like are reset. Then, a variable i is set to 1 (step S 102). The variable i will be described below.

Next, an ultrasonic wave is output from the ultrasonic sensor 13, and measurement of time from the output of the ultrasonic wave is started (step S 103). Specifically, the sensor control portion 32 controls the ultrasonic sensor 13 in accordance with a command from the CPU 21 to set the ultrasonic sensor 13 to the output mode. Then, the CPU 21 controls the sensor control portion 32 to transmit a specified pulse waveform to the ultrasonic sensor 13. After the ultrasonic sensor 13 receives the specified pulse waveform transmitted from the sensor control portion 32, the ultrasonic sensor 13 performs conversion to an ultrasonic wave that corresponds to the received pulse waveform and outputs the ultrasonic wave to the outside of the display apparatus 1. The measurement of time from the output of the ultrasonic wave is performed by referring to the timer 33.

Next, it is determined whether a reflected wave, which is an ultrasonic wave that is reflected when the ultrasonic wave output by the processing at step S103 hits an object, has been received during a specified time period (step S104). Specifically, the sensor control portion 32 controls the ultrasonic wave sensor 13 in accordance with a command from the CPU 21 to set the ultrasonic sensor 13 to the receiving mode. The reflected wave is received by the ultrasonic sensor 13 that has been set to the receiving mode and is recognized by the CPU 21. The specified time period is measured by the CPU 21 while referring to the timer 33. The specified time period is 0.05 seconds, for example.

If the reflected wave has not been received during the specified time period (NO at step S104), it is determined whether an end command has been input (step S105). Specifically, it is determined whether the end command has been input to the display apparatus 1 by pressing a power button (not shown in the drawings), which is used to turn on or off the power supply of the display apparatus 1. If the end command has not been input (NO at step S 1 05), the processing returns to step S102. If the end command has been input (YES at step S105), the main processing performed by the CPU 21 ends.

If a detection error or the like occurs, no reflected wave is detected during the specified time period (NO at step S104). If the detection error has occurred (NO at step S104) and the end command has not been input (NO at step S105), the processing returns to step S102.

If the reflected wave is received during the specified time period (YES at step S104), a distance to the object that has reflected the ultrasonic wave is detected (step S106). In a case where the reflected wave is received before the specified time period elapses in the processing of step S104, the processing at step S106 is started at the point in time when the reflected wave is received, without waiting the elapse of the specified time period. Specifically, the time that has elapsed after the measurement has been started by the processing at step S103, namely, the time that has elapsed after the output of the ultrasonic wave is referred to, and time until the reflected wave is received by the processing at step S104 is calculated. Based on the calculated time, the distance to the object that has reflected the ultrasonic wave is calculated. The distance to the object that has reflected the ultrasonic wave is calculated by dividing the product of the audio speed and the time by two. Hereinafter, the distance to the object that has reflected the ultrasonic wave and that has been detected by the processing at step 106 is referred to as the "target distance".

Next, it is determined whether the target distance is the same as the installation distance stored in the installation distance storage area 241 (step S107). The installation distance is a distance that is detected by using the ultrasonic sensor 13 in an environment (for example, a room in a house in which the user is not present) in which the display apparatus 1 is installed. The installation distance is detected in advance before the main processing is performed and is stored in the installation distance storage area 241. The detection of the installation distance is performed in the following manner. In the same manner as the processing at step S103, an ultrasonic wave is output from the ultrasonic sensor 13 that has been set to the output mode, and the time that has elapsed after the output of the ultrasonic wave is measured. The ultrasonic wave output from the ultrasonic sensor 13 is reflected by the wall of a room, for example, and the reflected wave is received by the ultrasonic sensor 13 that has been set to the receiving mode. In the same manner as the processing at step S106, the installation distance is detected based on the time from when the ultrasonic wave is output to when the reflected wave is received. The measurement of the installation distance may be performed in accordance with a command from the user, or may be automatically performed periodically.

If the user is not in front of the display apparatus 1, the target distance is the same as the installation distance (YES at step S107). If the user is in front of the display apparatus 1, the target distance is not the same as the installation distance (NO at step S 107). Namely, in the processing at step S107, it is determined whether the user is in front of the display apparatus 1. There is no need to perform setting such that it is determined whether the target distance is exactly the same as the installation distance. The setting may be performed such that, in a case where the target distance and the installation distance are within a certain distance range, it is assumed that the target distance is the same as the installation distance.

If the target distance is the same as the installation distance, namely, if it is determined that the user is not in front of the display apparatus 1 (YES at step S107), the processing proceeds to step S105.

If the target distance is not the same as the installation distance, namely, if it is determined that the user is in front of the display apparatus 1 (NO at step S107), the target distance is determined as the distance k (step S108). Specifically, the target distance is stored as the distance k in the detected distance storage area 231. The processing at step S108 is repeatedly performed while it is determined by the processing at step S109 (which will be described below) that the variable i is equal to or less than 20. The variable i represents the number of samplings that are determined and stored as the distances k by the processing at step S 108. The distance k is consecutively detected and stored in the detected distance storage area 231, by repeatedly performing the processing at steps S 103, S 104, and S106 to S 110 while the variable i is equal to or less than 20. The distance k is associated with the value of the variable i and additionally stored in the detected distance storage area 231.

Next, it is determined whether the value of the variable i is equal to or less than 20 (step S109). If the value of the variable i is equal to or less than 20 (YES at step S109), the variable i is incremented by one (step S110). Then, the processing returns to step S103. Namely, the processing at steps S 103 to S110 is repeatedly performed until the distance k is detected twenty-one times consecutively. In the present embodiment, it is assumed that the processing at steps S103 to S 110 is repeated at 0.1 second intervals. In this case, the value of the variable i when the user is first detected is "1 ", and the value of the variable i when the user is detected two seconds after the user has first been detected is "21 ". Namely, in the processing at step S109, it is determined whether or not the user is detected consecutively for two seconds.

For example, while the user is not in front of the display apparatus 1 after the main processing has been started, the ultrasonic wave output by the processing at step S103 is reflected by the wall of the room, for example, and the reflected wave is received (YES at step S104). In this case, the target distance is the same as the installation distance (YES at step S107). Therefore, if the end command is not input (NO at step S 1 05), the processing returns to step S102.

If the user appears in front of the display apparatus 1, the ultrasonic wave output by the processing at step S103 is reflected by the user, and the reflected wave is received (YES at step S104). The target distance is not the same as the installation distance (NO at step S107). Therefore, the target distance is stored as the distance k (step S108). Then, while the value of the variable i is equal to or less than 20 (YES at step S109), the variable i is incremented by one (step S110), the processing returns to step S103, and the processing at step S103 onward is repeated. Then, if the distance k is detected consecutively twenty-one times (i.e. for two seconds) (NO at step S109), the processing at step S111 (which will be described below) is performed.

For example, in a case where the user simply passes in front of the display apparatus 1, the user is not detected while the variable i is equal to or less than 20 (i.e., within two seconds) after the user has first been detected (YES at step S 107). Therefore, if the end command has not been input by the user (NO at step S105), the variable i is reset to "1" (step S102). Then, the processing at step S 103 onward is repeated. Accordingly, in a case where the user passes in front of the display apparatus 1, the application is not changed by processing at steps S 112 to S 119, which will described below. Therefore, it is possible to reduce a possibility that the application is changed in a case where the user has no intention to use the display apparatus 1.

If it is determined by the processing at step S109 that the variable i is neither equal to nor less than 20, namely, if the user is detected twenty-one times (i.e., for two seconds) (NO at step S 109), it is determined whether the distance k when the variable i is equal to 21 is the same as the distance k when the variable i is equal to 1 (step S111). The distances k have been stored in the detected distance storage area 231 of the RAM 23. Hereinafter, the distance k when the variable i is equal to 21 is referred to as the "latest distance k". Hereinafter, the distance k when the variable i is equal to 1 is referred to as the "first distance k". It is not necessary to perform setting such that it is determined whether the latest distance k is exactly the same as the first distance k. The setting may be performed such that, in a case where a difference between the latest distance k and the first distance k is within a certain range, it is assumed that the latest distance k is the same as the first distance k.

In a case where the latest distance k is the same as the first distance k, it is considered that the user is located at the same position. In this case, it is assumed that the user is located at the same position and is doing some work other than operating the display apparatus 1 or operating the application displayed by the processing at step S 119, which will be described below. If the latest distance k is the same as the first distance k (YES at step S111), the processing proceeds to step S105. Accordingly, the application is not changed by the processing at steps S 112 to S 119, which will be described below. Thus, when the user is located at the same position and doing some work other than operating the display apparatus 1, the application is not changed. Therefore, it is possible to reduce a possibility that the application is changed when the user has no intention to operate the application. Further, when the user is located at the same position and operating the application displayed by the processing at step S 119, the application that is being operated is not changed. Thus, it is possible to reduce a possibility that the application is changed while the user is operating the application.

On the other hand, in a case where the latest distance k is not the same as the first distance k, it is considered that the user is moving. In this case, there is a high possibility that the user is moving closer to the display apparatus 1 in order to use the display apparatus 1 or that user changes the distance k in order to change an application to be displayed on the display 11 by the processing at steps S 112 to S 119. Therefore, if the latest distance k is not the same as the first distance k, an application corresponding to the distance from the user to the display apparatus 1 is displayed on the display 11 by the processing at steps S 112 to S 119. The processing at steps S 112 to S 119 will be explained below.

If the latest distance k is not the same as the first distance k (NO at step S111), an application is selected from the first data table 41 (refer to FIG. 4) stored in the first data table storage area 242 (refer to FIG. 3) (step S112). Specifically, the first data table 41 is referred to and an application corresponding to the latest distance k is selected and stored in the setting storage area 232. Namely, an application is selected which may be operated by an input device that may be used at the latest distance k.

Next, an input device is selected from the input device data table 42 (refer to FIG. 5) stored in the input device data table storage area 247 (refer to FIG. 3), and an operation of the selected input device is started (step S 113). Specifically, the input device data table 42 is referred to and an input device corresponding to the latest distance k is selected. Then, electric power and the like is supplied to the selected input device and the operation of the input device is started.

Next, an icon state is selected from the second data table 43 (refer to FIG. 6) stored in the second data table storage area 243 (refer to FIG. 3) (step S 114). Specifically, the second data table 43 is referred to and an icon state corresponding to the latest distance k is selected and additionally stored in the setting storage area 232.

Next, a character size is selected from the third data table 44 (refer to FIG. 7) stored in the third data table storage area 244 (refer to FIG. 3) (step S 115). Specifically, the third data table 44 is referred to and a character size corresponding to the latest distance k is selected and additionally stored in the setting storage area 232.

Next, a volume level is selected from the fourth data table 45 (refer to FIG. 8) stored in the fourth data table storage area 245 (refer to FIG. 3) (step S116). Specifically, the fourth data table 45 is referred to and a volume level corresponding to the latest distance k is selected and additionally stored in the setting storage area 232.

Next, a luminance level is selected from the fifth data table 46 (refer to FIG. 9) stored in the fifth data table storage area 246 (refer to FIG. 3) (step S 117). Specifically, the fifth data table 46 is referred to and a luminance level corresponding to the latest distance k is selected and additionally stored in the setting storage area 232.

Then, based on the volume level selected by the processing at step S 116, a volume of audio to be output from the speakers 14 is set (step S 118). Specifically, the CPU 21 controls the audio driver 28 such that the audio may be output from the speakers 14 at the volume level selected by the processing at step S 116.

Next, based on the various types of settings that are selected by the processing at steps S 112, S 114, S 115 and S 117 and that are stored in the setting storage area 232, an application is activated and displayed on the display 11 (step S119). Specifically, the CPU 21 controls the display driver 29 to display an application on the display 11. At this time, an application that may be operated by using the input device that is appropriate for the distance k is automatically displayed. Therefore, the user's operation to select the application may be reduced. Namely, the main application selected by the processing at step S 112 is activated and displayed on the display 11. Further, the icon display applications selected by the processing at step S 112 may be displayed on the display 11 as icons in the order of priority. The user may select one of the icon display applications by selecting one of the icons. Because the icons are displayed in the order of priority, the user may easily select an application that the user desires to use. Although a screen on which each of the icon display applications is activated is not displayed on the display 11, the icon display applications are also activated (step S 119). As a result, in a case where the user desires to operate one of the icon display applications by selecting one of the icons, the selected icon display application may be rapidly displayed on the display 11 (step S 119). Further, the user may operate the application by the input device selected by the processing at step S113.

The icons displayed on the display 11 are displayed in accordance with the icon state selected at step S 114 (step S 119). The character displayed on the display 11 is displayed in the character size selected by the processing at step S 115 (step S 119). The luminance of the display 11 is set to the luminance level selected by the processing at step S 117 (step S 119). Next, the processing proceeds to step S105.

For example, a first example is considered in which the latest distance k is "50 cm", which is different from the first distance k. In this case, the first data table 41 is referred to and an application is selected that is associated with the latest distance k "50 cm" (step S112). The latest distance k "50 cm" is in the range of 0 ≤ k ≤100 cm in the first data table 41 shown in FIG. 4. Therefore, the hand writing mode, the photo processing mode, the phone mode and the schedule mode, which are associated with the range of 0 ≤ k ≤ 100 cm, are selected and stored in the setting storage area 232 (step S 112). At this time, the hand writing mode is stored as the main application. The photo processing mode, the phone mode and the schedule mode are associated with the priorities and stored as the icon display applications.

Next, the input device data table 42 is referred to, the input device corresponding to the latest distance k "50 cm" is selected, and the operation of an selected input device is started (step S113). The latest distance k "50 cm" is in the range of 0 ≤ k ≤ 100 cm in the input device data table 42 shown in FIG. 5. Therefore, the touch panel 12 and the remote control 17, which are associated with the range of 0 ≤ k ≤100 cm, are selected. Then, electric power is supplied to the touch panel 12, the touch panel driver 30, the remote control receiving portion 15 and the remote control driver 31 so that the touch panel 12 and the remote control 17 may operate.

Next, the second data table 43 is referred to and the icon state associated with the latest distance k "50 cm" is selected (step S114). The latest distance k "50 cm" is in the range of 0 ≤ k ≤ 120 cm in the second data table 43 shown in FIG. 6. Therefore, the icon state "small", which is associated with the range of 0 ≤ k ≤ 120 cm, is selected and additionally stored in the setting storage area 232 (step S 114).

Next, the third data table 44 is referred to, and the character size associated with the latest distance k "50 cm" is selected (step S115). The latest distance k "50 cm" is in the range of 0 ≤ k ≤ 80 cm in the third data table 44 shown in FIG. 7. Therefore, the character size "1", which is associated with the range of 0 ≤ k ≤ 80 cm, is selected and additionally stored in the setting storage area 232 (step S 115).

Next, the fourth data table 45 is referred to and the volume level associated with the latest distance k "50 cm" is selected (step S 116). The latest distance k "50 cm" is in the range of 0 ≤ k ≤ 150 cm in the fourth data table 45 shown in FIG. 8. Therefore, the volume level "1 ", which is associated with the range of 0 ≤ k ≤ 150 cm, is selected and additionally stored in the setting storage area 232 (step S 116).

Next, the fifth data table 46 is referred to, and the luminance level associated with the latest distance k "50 cm" is selected (step S117). The latest distance k "50 cm" is in the range of 0 ≤ k ≤20 cm in the fifth data table 46 shown in FIG. 9. Therefore, the luminance level "1 ", which is associated with the range of 0 ≤ k ≤ 120 cm, is selected and additionally stored in the setting storage area 232 (step S 117).

Then, based on the volume level "1" selected by the processing at step S 116, the volume of the audio to be output from the speakers 14 is set (step S 118). As a result, the CPU 21 may control the audio driver 28 such that the audio is output from the speakers 14 at a volume corresponding to the volume level "1 ".

Then, the CPU 21 controls the display driver 29 based on the various types of settings selected by the processing at steps S 112, S 114, S115 and S 117 and stored in the setting storage area 232, and the applications are displayed on the display 11 (step S 119).

For a case where the latest distance k is 50 cm, an example of an image that is displayed on the display 11 by the processing at step S 119 will be explained with reference to FIG. 11. As shown in FIG. 11, the icon display portion 51, on which vertically arranged icons 511 to 514 are displayed, is displayed on a left part of the display 11. The main display portion 52 is displayed in an area extending from the right of the icon display portion 51 to a right part of the display 11. A main application is displayed on the main display portion 52. A time display portion 53 is displayed above the icon display portion 51. Time is displayed on the time display portion 53. A name display portion 54 is displayed on the upper left of the main display portion 52. The name of the activated main application is displayed on the name display portion 54. The layout of the display portions may be set as desired, and other display portions may be provided.

In a case where the latest distance k is 50 cm, the hand writing mode, which is the main application selected by the processing at step S 112, is activated and displayed on the main display portion 52. Further, the photo processing mode, the phone mode and the schedule mode, which are the icon display applications selected by the processing at step S112, are displayed as icons on the icon display portion 51. The icons are displayed on the icon display portion 51 such that the icons are arranged from top to bottom in the order of descending priorities. Therefore, an icon 511 of the photo processing mode with the highest priority is displayed in the top position. An icon 512 of the phone mode with the second highest priority is displayed in the second position from the top. An icon 513 of the schedule mode with the third highest priority is displayed in the third position from the top. An icon 514, which is used to shift to the menu mode, is displayed below the icon 513 of the schedule mode. The menu mode is used for selecting another application or changing various types of settings. The icons 511 to 514 are displayed in a size corresponding to the icon state "small" selected by the processing at step S 114. Although the screen on which each of the icon display applications is activated is not displayed on the display 11, the photo processing mode, the phone mode and the schedule mode, which are the icon display applications, are activated (step S 119). Accordingly, in a case where the user desires to operate one of the photo processing mode, the phone mode and the schedule mode by selecting one of the icons 511 to 513, the selected mode may be rapidly displayed on the display 11 (step S 119).

The name of the main application "HANDWRITING MODE" is displayed on the name display portion 54. The current time "12:00" is displayed on the time display portion 53. The characters on the name display portion 54 and the time display portion 53 are displayed in a size corresponding to the character size "1" selected by the processing at step S 115. A character in the main application etc. displayed on the main display portion 52 may be displayed in a size corresponding to the character size "1" selected by the processing at step S 115. The luminance of the display 11 is set to luminance corresponding to the luminance level "1" selected by the processing at step S 117.

Thus, the display apparatus 1 is set to the settings appropriate for the case where the latest distance k is 50 cm. Specifically, in a case where the user is located at a position 50 cm from the display apparatus 1, the hand writing mode, which is the main application set in advance, is automatically displayed. The hand writing mode is the application that is appropriate for being operated by using the touch panel 12. Namely, the application that may be operated by using the touch panel 12 is automatically displayed. This reduces the user's operation to select the application that may be operated by using the touch panel 12. Because the touch panel 12 is automatically brought into a usable state by the processing at step S 113, the user may immediately use the touch panel 12 to operate the main application. The user may use the remote control 17 to operate the main application. The user may select one of the icons 511 to 514 using one of the touch panel 12 and the remote control 17, and may thereby select one of the icon display applications.

When the applications are displayed on the display 11 by the processing at step S 119, the processing then proceeds to step S105. If the end command has not been input (NO at step S105), the processing returns to step S102. While the user is located at the same position and is operating the displayed application, the latest distance k is the same as the first distance k (YES at step S111). Accordingly, the processing proceeds to step S 105 while the applications displayed by the processing at step S 119 remain displayed.

Next, an example will be explained where the user moves from the position where the distance k from the user to the display apparatus 1 is 50 cm (in the first specific example) and, within two seconds, the user reaches a position where the distance from the user to the display apparatus 1 is 180 cm. In this case, the first distance k is 50 cm and the latest distance k is 180 cm (steps S 106 to S108). Therefore, the latest distance k is not the same as the first distance k (NO at step S111).

A second example is considered in which the latest distance k is "180 cm". In this case, in the same manner as the case of the first example, the first data table 41 is referred to and applications are selected that are associated with the latest distance k "180 cm" (step S112). Specifically, the received fax display mode, the audio playback mode, the video playback mode and the text news mode are selected and stored in the setting storage area 232 (step S 112).

Next, the input device data table 42 (refer to FIG. 5) is referred to, the remote control 17, which is the input device associated with the latest distance k "180 cm", is selected, and the operation of the remote control receiving portion 15 is started (step S113). At this time, the touch panel 12 does not operate. Therefore, it is possible to reduce electric power consumption as compared to a case where the touch panel 12 is operated.

Next, the second data table 43 (refer to FIG. 6) is referred to, and the icon state "large", which is associated with the latest distance k "180 cm", is selected and additionally stored in the setting storage area 232 (step S114). The third data table 44 (refer to FIG. 7) is referred to, and the character size "2", which is associated with the latest distance k "180 cm", is selected and additionally stored in the setting storage area 232 (step S115). The fourth data table 45 (refer to FIG. 8) is referred to, and the volume level "2", which is associated with the latest distance k "180 cm", is selected and additionally stored in the setting storage area 232 (step S 116). The fifth data table 46 (refer to FIG. 9) is referred to, and the luminance level "2", which is associated with the latest distance k "180 cm", is selected and additionally stored in the setting storage area 232 (step S 117).

Based on the volume level "2" selected by the processing at step S 116, the volume of the audio to be output from the speakers 14 is set (step S118). Accordingly, the CPU 21 may control the audio driver 28 such that the audio may be output from the speakers 14 at a volume corresponding to the volume level "2". As a consequence, although the distance from the user to the display apparatus 1 is larger than in the case of the first example, the audio may be output at a higher volume than in the case of the first example. Accordingly, the user may easily hear the audio.

Then, based on the settings selected by the processing at steps S 112, S 114, S 115 and S117 and stored in the setting storage area 232, the applications are displayed on the display 11 (step S 119). Namely, the applications are changed.

For the case where the latest distance k is 180 cm, an example of an image that is displayed on the display 11 by the processing at step S119 will be explained with reference to FIG. 12. As shown in FIG. 12, the icon display portion 51, the main display portion 52, the time display portion 53 and the name display portion 54 are displayed in the same layout as that in the case of the first example shown in FIG. 11.

In a case where the latest distance k is 180 cm, the received fax display mode, which is the main application selected by the processing at step S 112, is activated and displayed on the main display portion 52. Further, the audio playback mode, the video playback mode and the text news mode, which are the icon display applications selected by the processing at step S 112, are displayed as icons on the icon display portion 51. An icon 515 of the audio playback mode, an icon 516 of the video playback mode, and an icon 517 of the text news mode are displayed on the icon display portion 51 such that the icons 515 to 517 are arranged from top to bottom in the order of descending priorities. An icon 518, which is used to shift to the menu mode, is displayed below the icon 517 of the text news mode. The icons 515 to 518 are displayed in a size corresponding to the icon state "large" selected by the processing at step S 114. Namely, the icon size is larger than in the case shown in FIG. 11 where the icons are displayed in a size corresponding to the icon state "small", which is for the case where the latest distance k is 50 cm.

Although a screen on which each of the icon display applications is activated is not displayed on the display 11, the audio playback mode, the video playback mode and the text news mode, which are the icon display applications, are activated (step S 119). Accordingly, in a case where the user desires to operate one of the audio playback mode, the video playback mode and the text news mode by selecting one of the icons 515 to 518, the selected mode may be rapidly displayed on the display 11 (step S 119).

The name of the main application "RECEIVED FAX DISPLAY MODE" is displayed on the name display portion 54. The current time "12:00" is displayed on the time display portion 53. The characters on the name display portion 54 and the time display portion 53 are displayed in a size corresponding to the character size "2" selected by the processing at step S115. Namely, the character size is larger than in the case shown in FIG. 11 where the characters are displayed in the character size "1", which is for the case where the latest distance k is 50 cm. A character in the main application etc. displayed on the main display portion 52 may be displayed in a size corresponding to the character size "2" selected by the processing at step S 115. The luminance of the display 11 is set to luminance corresponding to the luminance level "2" selected by the processing at step S 117.

Thus, the display apparatus 1 is set to the settings appropriate for the case where the latest distance k is 180 cm. Specifically, in a case where the user is located at a position 180 cm from the display apparatus 1, the received fax display mode, which is the main application set in advance, is automatically displayed. This reduces the user's operation to select the received fax display mode. The received fax display mode is an application that is appropriate for being operated by using the remote control 17. The remote control receiving portion 15 is automatically brought into a usable state by the processing at step S113. Accordingly, the user may immediately use the remote control 17 to operate the main application.

Although the distance from the user to the display apparatus 1 is larger than in the case of the first example, the character size, the luminance and the icon size are all increased. Accordingly, the user may easily confirm the content displayed on the display 11.

Next, a third example is considered in which the latest distance k is "400 cm". In this case, in the same manner as the cases of the first and second examples, the first data table 41 is referred to, and an application is selected that is associated with the latest distance k "400 cm" (step S 112). Specifically, the slide show mode is selected and stored in the setting storage area 232 (step S 112).

Next, the input device data table 42 (refer to FIG. 5) is referred to, and an input device associated with the latest distance k "400 cm" is selected. However, the input device data table 42 is set such that no input device is activated in a case where the distance k is 400 cm. Therefore, in a case where the touch panel 12 and the remote control receiving portion 15 are in a usable state, the operation of the touch panel 12 and the remote control receiving portion 15 is stopped (step S113). This makes it possible to reduce electric power consumption.

Next, the second data table 43 (refer to FIG. 6) is referred to, and the icon state that is associated with the latest distance k "400 cm" is selected. As shown in FIG. 6, in a case where the distance k is larger than 300 cm, the icon state is "non-display". Accordingly, data indicating "non-display" is selected and additionally stored in the setting storage area 232 (step S 114). The third data table 44 (refer to FIG. 7) is referred to, and the character size "4", which is associated with the latest distance k "400 cm", is selected and additionally stored in the setting storage area 232 (step S115). The fourth data table 45 (refer to FIG. 8) is referred to, and the volume level "3", which is associated with the latest distance k "400 cm", is selected and additionally stored in the setting storage area 232 (step S116). The fifth data table 46 (refer to FIG. 9) is referred to, and the luminance level "4", which is associated with the latest distance k "400 cm", is selected and additionally stored in the setting storage area 232 (step S117).

Then, based on the volume level "3" selected by the processing at step S 116, the volume of the audio to be output from the speakers 14 is set (step S 118). Accordingly, the CPU 21 may control the audio driver 28 such that the audio is output from the speakers 14 at a volume corresponding to the volume level "3". As a consequence, although the distance from the user to the display apparatus 1 is larger than in the cases of the first and second examples, the audio may be output at a higher volume than in the cases of the first and second examples. Accordingly, the user may easily hear the audio.

Then, based on the settings selected by the processing at steps S 112, S 114, S115 and S117 and stored in the setting storage area 232, the application is displayed on the display 11 (step S 119). Accordingly, the user may view a slide show.

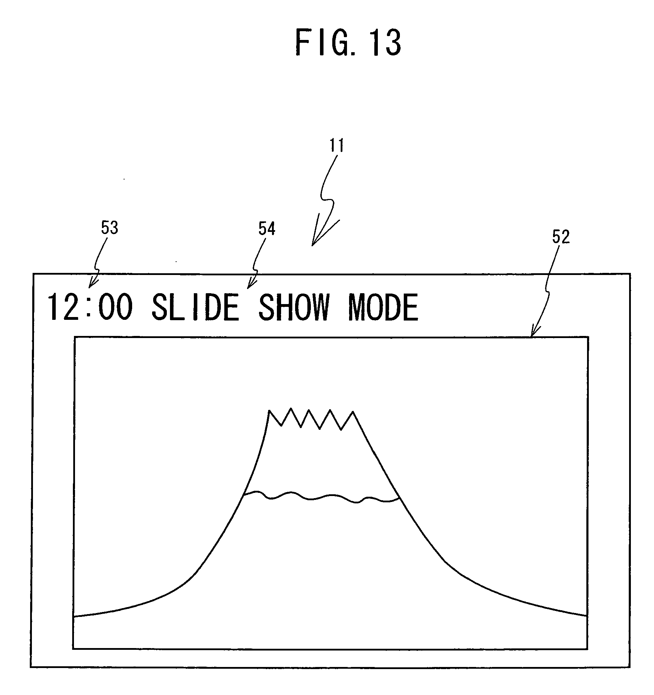

For a case where the latest distance k is 400 cm, an example of an image that is displayed on the display 11 by the processing at step S119 will be explained with reference to FIG. 13. As shown in FIG. 13, the main display portion 52 is displayed in an area extending from slightly lower than the upper edge to the lower part of the display 11 and also extending from the left part to the right part of the display 11. A photograph for the slide show mode, which is the main application set in advance, is displayed on the main display portion 52. The current time "12:00" is displayed on the time display portion 53 that is provided on the upper left part of the display 11. The name of the application "SLIDE SHOW MODE" is displayed on the name display portion 54, which is provided on the right of the time display portion 53. The icon display portion 51 (refer to FIGS. 11 and 12) is not displayed. The characters on the name display portion 54 and the time display portion 53 are displayed in a size corresponding to the character size "4" selected by the processing at step S115. Accordingly, the character size is larger than in the case shown in FIG. 12 where the characters are displayed in the character size "2", which is for the case where the latest distance k is 120 cm. The luminance of the display 11 is set to luminance corresponding to the luminance level "4", which is selected by the processing at step S117.

As a result, the display apparatus 1 is set to the settings appropriate for the case where the latest distance k is 400 cm. Specifically, in a case where the user is located at a position 400 cm from the display apparatus 1, the slide show mode, which is the main application, is activated and automatically displayed. This reduces the user's operation to select the slide show mode. Because the slide show mode is an application that does not require an operation by the user, the operation of the touch panel 12 and the remote control receiving portion 15 is automatically stopped. This makes it possible to reduce electric power consumption.

Although the distance from the user to the display apparatus 1 is larger than in the cases of the first and second examples, the character size and the luminance are increased. Accordingly, the user may easily confirm the content displayed on the display 11.

As described above, the main processing of the present embodiment is performed and at least one of the applications is displayed on the display 11. According to the present embodiment, at least one of the applications is selected and displayed in accordance with the distance from the user to the display apparatus 1. Accordingly, the application is automatically changed in accordance with the distance from the user to the display apparatus 1.

In the present embodiment, the display 11 corresponds to a display of the present invention. The first data table 41 corresponds to first data of the present invention. The first data table storage area 242 corresponds to a first storage device of the present invention. The CPU 21 that detects the distance k in the processing at steps S106 and S108 shown in FIG. 10 corresponds to a detection device of the present invention. The CPU 21 that performs the processing at step S 112 shown in FIG. 10 corresponds to a selection device of the present invention. The CPU 21 that performs steps S 114, S 115 and S 119 shown in FIG. 10 corresponds to a display control device of the present invention. The touch panel 12, the remote control 17 and the remote control receiving portion 15 correspond to an input device of the present invention.

The touch panel 12 corresponds to a touch input device of the present invention. The range of 0 ≤ k ≤ 100 cm in the first data table 41 corresponds to a first range of the present invention. The remote control 17 and the remote control receiving portion 15 correspond to a non-contact input device of the present invention. The range of 100 cm < k≤300 cm in the first data table 41 corresponds to a second range of the present invention. The range of k > 300 cm in the first data table 41 corresponds to a third range of the present invention. Each of the main applications of the first data table 41 corresponds to one application of the present invention. The icon display applications of the first data table 41 correspond to the other applications of the present invention. The second data table 43 corresponds to second data of the present invention.

The second data table storage area 243 corresponds to a second storage device of the present invention. The third data table 44 corresponds to third data of the present invention. The third data table storage area 244 corresponds to a third storage device of the present invention. The fourth data table 45 corresponds to fourth data of the present invention. The fourth data table storage area 245 corresponds to a fourth storage device of the present invention. The CPU 21 that causes the audio to be output from the speakers 14 after the processing at steps S 116 and S 118 shown in FIG. 10 corresponds to an output control device of the present invention. The fifth data table 46 corresponds to fifth data of the present invention. The fifth data table storage area 246 corresponds to a fifth storage device of the present invention. The CPU 21 that performs the processing at step S 117 shown in FIG. 10 and the processing of setting the luminance of the display 11 in the processing at step S 119 corresponds to a luminance setting device of the present invention.

The processing that detects the distance k in the processing at steps S106 and S108 shown in FIG. 10 corresponds to a step of detecting a target distance of the present invention. The processing at step S 112 shown in FIG. 10 corresponds to a step of selecting at least one application of the present invention. The processing at steps S 114, S 115 and S 119 shown in FIG. 10 corresponds to a step of displaying at least one application of the present invention.

The display apparatus of the present disclosure is not limited to the present embodiment, and various types of modifications may be made. For example, in the present embodiment, the touch panel 12 is used as a touch input device. However, the touch input device is not limited to the touch panel 12 and another input device may be used. In the present embodiment, the remote control 17 and the remote control receiving portion 15 are used as a non-contact input device. However, the non-contact input device is not limited to the remote control 17 and another input device may be used. For example, an operation button may be provided as a touch input device on a front surface of the display apparatus 1. A voice recognition function may be provided as a non-contact input device so that the display apparatus 1 may be operated by the voice of the user.

Only one type is provided for each of the data tables 41 to 46 shown in FIGS. 4 to 9. However, each of the data tables 41 to 46 is not limited to one type. For example, the data tables 41 to 46 may be stored in the ROM 22 or the flash memory 24 as default settings, and data tables 41 to 46 that are different from the data tables 41 to 46 stored as the default settings may be set by the user as desired. Further, the user may determine whether to use the data tables 41 to 46 stored as default settings or to use the data tables 41 to 46 set by the user as desired. For example, a plurality of types may be provided for each of the data tables 41 to 46. Further, the user may select data tables from among the plurality of types of the data tables 41 to 46 and may perform settings based on the selected data tables.

The type of the input device that the user may use may be displayed on the display 11. In this case, because the user may easily recognize the input device that the user may use, operability of the display apparatus 1 may be further improved. The types of the applications are not limited to those of the present embodiment. For example, spreadsheet software etc. may be used.

In the present embodiment, in the processing at steps S 112 to S 117 shown in FIG. 10, the latest distance k is used to select various types of settings. However, another method may be used to select the various types of settings. For example, the distance k may be measured five times and an average distance may be calculated from five measurement results. Then, the average distance may be used to select the various types of settings. In the present embodiment, the ultrasonic sensor 13 is used to measure the distance k. However, another method may be used to measure the distance k. For example, the display apparatus 1 may be provided with a CCD camera, and the distance k from the user to the display apparatus 1 may be measured by image processing.

In the present embodiment, the application, the input device, the icon state, the character size, the volume and the luminance may be changed based on the distance from the user to the display apparatus 1. However, all of the application, the input device, the icon state, the character size, the volume and the luminance do not have to be changed. For example, settings may be such that, among the data tables 41 to 46, only the first data table 41 is provided and only the application is changed. Alternatively, settings may be such that, in addition to the application, at least one of the input device, the icon state, the character size, the volume and the luminance is changed.

Items that may be changed based on the distance k are not limited to the application, the input device, the icon state, the character size, the volume and the luminance. For example, the display density and the backlight color of the display 11 may be changed based on the distance k.

While the invention has been described in connection with various exemplary structures and illustrative embodiments, it will be understood by those skilled in the art that other variations and modifications of the structures and embodiments described above may be made without departing from the scope of the invention. Other structures and embodiments will be apparent to those skilled in the art from a consideration of the specification or practice of the invention disclosed herein. It is intended that the specification and the described examples are illustrative with the true scope of the invention being defined by the following claims.

## Claims

1. A display apparatus (1) comprising:
a display (11) that is adapted to display an image;
a first storage device (242) that stores first data (41) in which each of a plurality of reference distances is associated with at least one application of a plurality of applications;
a detection device (21) that is configured to detect a target distance that is a distance from a user to the display apparatus;
a selection device (21) that is configured to refer to the first data and selects, from among the plurality of applications, the at least one application associated with one of the plurality of reference distances corresponding to the target distance detected by the detection device; and
a display control device (21) that is configured to activate the at least one application selected by the selection device and displays the at least one application on the display.

2. The display apparatus according to claim 1, further comprising:
a plurality of input devices (12, 15, 17) that are respectively used in different input methods, each of the input methods being a method in which a command is input;
wherein, in the first data, each of the plurality of reference distances is associated with the at least one application that can be operated via the input device that can be used at the each of the plurality of reference distances.

3. The display apparatus according to claim 1 or 2, further comprising:
a touch input device (12) that is provided on a main body of the display apparatus and via which a command can be input by being touched;
wherein, in the first data, at least one of the plurality of reference distances within a first range is associated with, among the plurality of applications, an application that can be operated via the touch input device, the first range being a range in which a hand of the user reaches the main body.

4. The display apparatus according to claim 3, wherein
in a case where the target distance is at least within the first range, the command can be input by operation of the touch input device , and
in a case where the target distance is larger than an upper limit of the first range, the touch input device does not operate.

5. The display apparatus according to claim 3 or 4, further comprising:
a non-contact input device (15, 17) via which a command can be input without the main body being touched;
wherein, in the first data, at least one of the plurality of reference distances within a second range is associated with, among the plurality of applications, an application that can be operated via the non-contact input device, the second range being a specified distance range, and a lower limit of the second range being larger than the upper limit of the first range.

6. The display apparatus according to claim 5, wherein
in a case where the target distance is at least within the second range, the command can be input by operation of the non-contact input device, and
in a case where the target distance is larger than an upper limit of the second range, the non-contact input device does not operate.

7. The display apparatus according to claim 5 or 6, wherein
in the first data, at least one of the plurality of reference distances within a third range is associated with, among the plurality of applications, an application that need not be operated by the user, the third range being a specified distance range, and a lower limit of the third range being larger than the upper limit of the second range.

8. The display apparatus according to any one of claims 1 to 7, wherein
in a case where the target distance is detected a specified number of times consecutively by the detection device, the selection device refers to the first data and selects, from among the plurality of applications, the at least one application associated with one of the plurality of reference distances corresponding to the target distance, and
in a case where the target distance is not detected the specified number of times consecutively by the detection device, the selection device selects none of the plurality of applications.

9. The display apparatus according to any one of claims 1 to 8, wherein
in the first data, each of the plurality of reference distances is associated with a plurality of the applications,
the selection device refers to the first data and selects the plurality of applications associated with one of the plurality of reference distances corresponding to the target distance,
the display control device activates one application of the plurality of applications selected by the selection device and displays the one application on the display, and
the display control device displays the other applications of the plurality of applications selected by the selection device, as icons, on the display.

10. The display apparatus according to claim 9, further comprising:
a second storage device (243) that stores second data (43) in which each of the plurality of reference distances is associated with one of a plurality of icon sizes;
wherein the display control device is configured to refer to the second data, selects, from among the plurality of icon sizes, an icon size associated with one of the plurality of reference distances corresponding to the target distance, and displays on the display the icons in the selected icon size.

11. The display apparatus according to any one of claims 1 to 10, further comprising:
a third storage device (244) that stores third data (44) in which each of the plurality of reference distances is associated with one of a plurality of character sizes;
wherein the display control device is configured to refer to the third data, selects, from among the plurality of character sizes, a character size associated with one of the plurality of reference distances corresponding to the target distance, and displays on the display a character in the selected character size.

12. The display apparatus according to any one of claims 1 to 11, further comprising:
a speaker (14) that is adapted to output audio;
a fourth storage device (245) that stores fourth data (45) in which each of the plurality of reference distances is associated with one of a plurality of volume levels of the audio to be output from the speaker; and
an output control device (21) that is configured to refer to the fourth data and selects, from among the plurality of volume levels, a volume level associated with one of the plurality of reference distances corresponding to the target distance, and that causes the audio to be output from the speaker at the selected volume level.

13. The display apparatus according to any one of claims 1 to 12, further comprising:
a fifth storage device (246) that stores fifth data (46) in which each of the plurality of reference distances is associated with one of a plurality of luminance levels of the display; and
a luminance setting device (21) that is configured to refer to the fifth data and selects, from among the plurality of luminance levels, a luminance level associated with one of the plurality of reference distances corresponding to the target distance, and that sets luminance of the display to the selected luminance level.

14. A display control method that is performed in a display apparatus (1) including a display (11) that is adapted to display an image, the method comprising the steps of:
detecting a target distance that is a distance from a user to the display apparatus;
referring to data (41) in which each of a plurality of reference distances is associated with at least one application of a plurality of applications;
selecting, from among the plurality of applications, the at least one application associated with one of the plurality of reference distances corresponding to the target distance;
activating the at least one application; and
displaying the at least one application on the display.

15. A computer-readable medium storing a display control program that is executed in a display apparatus (1) including a display (11) that is adapted to display an image, the program comprising instructions that cause a computer to perform the steps of the display control method according to claim 14.
